# EUROPEAN PATENT APPLICATION

(11) **EP 4 697 240 A1**
(43) Date of publication of application: **18.02.2026**
(21) Application number: 24787976.0
(22) Date of filing: 05.04.2024
(51) Int. Cl.: G06N 5/01

(54) **METHOD AND APPARATUS FOR MULTI-PARTY DECISION MAKING OR ADVICE MAKING MEDIATION USING LARGE MODEL**

(30) Priority: 13.04.2023 CN 202310392279
(71) Applicant: Beijing Goose Factory Technology Co. Ltd., Beijing 100080 (CN)
(72) Inventor: ZHENG, Xin, Beijing 100080 (CN)
(74) Representative: Valet Patent Services Limited
(86) International application number: PCT/CN2024/086213
(87) International publication number: WO 2024/212873

(57) **Abstract**

Social attribute is an important attribute of human beings. Among two or more individuals, various problems often arise. One important way to solve such problems is to have someone mediate decision making or advice making. For example, the profession of judge is a typical profession for mediation and adjudication among two or more subject parties. A person who can implement decision making or advice making mediation is usually the one having a high level of knowledge and prestige, and the cost of cultivating and retaining such a person is generally high. Moreover, understanding and summarizing information from all parties for research and judgment is another time-consuming task. General artificial intelligence (AI) large models emerging in today's human society possess extremely high levels of knowledge and neutrality, and it would be worthwhile to work on using the general AI large models to carry out the above task to obtain a fair result as soon as possible and greatly reduce the cost.

## Description

### TECHNICAL FIELD

The present disclosure belongs to the field of general artificial-intelligence large language models (LLMs), and particularly relates to a method and an apparatus for implementing multi-party decision or recommendation using an LLM.

### BACKGROUND ART

With the deepening of the revolution in social productivity, interactive general artificial-intelligence LLMs have become a key technological breakthrough. For example, GPT-4 launched by OpenAI expands multimodal interaction to include text, voice, images, and video. These powerful models will continue to evolve and improve. How to rapidly apply the capabilities of such models to further enhance social productivity has become an important research direction across fields. The main purpose of a general model is to handle different tasks using a unified model. To enable generalization, existing general AI models all use a conversational modality in which different task descriptions and task data are uniformly input via dialogue. In application domains, it is valuable to develop more general methods to leverage the characteristics and capabilities of multimodal LLMs.

Sociality is an important human attribute. Among two or more individuals, various problems frequently arise between one another. One important way of solving such problems is to have someone provide a decision or a recommendation in the middle. For example, the profession of a judge is a typical case of mediating and adjudicating among two or more parties. Persons capable of providing a decision or a recommendation usually possess a certain level of knowledge and prestige, and cultivating and maintaining such persons is generally very costly. Moreover, learning and summarizing information from all parties for analysis and judgment is another very time-consuming task.

### SUMMARY OF THE INVENTION

### Technical Problem

General artificial-intelligence LLMs emerging in human society possess very high levels of knowledge and neutrality. How to use a LLM to perform the foregoing work, quickly obtain fair results, and greatly reduce costs is a meaningful problem to be solved.

### Technical Solution

In view of the foregoing, an object of the present invention is to provide a method and an apparatus for implementing multi-party decision or recommendation using a general artificial-intelligence LLM.

To achieve the above function, a method of using artificial intelligence is provided and applied on an apparatus. The method uses a LLM as a main information-processing hub. The model can accept multiple information modalities, including but not limited to images, video, audio, and text.

"Multi-party" as referred to herein means two or more parties jointly concerned with the same matter and wishing to obtain a decision or a recommendation from a intermediary. "Decision or recommendation" as referred to herein means a decision or a recommendation that affects some or all of the foregoing parties.

The output information from each party is: content related to itself regarding the matter of common interest, wherein the content may include, without limitation, images, video, audio, and text.

The input to the LLM is: the information of the foregoing parties is jointly input to the LLM.

In addition, it is necessary to specify the task to be executed by the LLM after receiving the foregoing information and to specify the format of the output information. The default output format is a respective decision or recommendation for each party.

The output of the LLM is: after completing the required task, the task result is output in the specified format. The result is a decision or recommendation corresponding to at least two relevant parties, and the results for respective parties may be completely identical.

The specific implementation steps of the method are as follows:
S1: Specify task information;
S2: Each party inputs its own information related to the task specified in S1 into a space corresponding to that party;
S3: The information of each party is serialized in sequence and, together with the task information and the output format, is input into the LLM. The default output format is one corresponding decision or recommendation for each party;
S4: If the information of a party includes data that cannot be simply serialized, such as but not limited to images, audio, or video, the corresponding data is labeled with the party and is sent separately to the LLM;
S5: The LLM returns a decision or recommendation corresponding to the specified parties in the designated format. The results for the respective parties may be completely identical.

To further improve usability of the AI system of this method, information related to the specified task mentioned in step S2 may be incomplete due to omissions by a party. Therefore, the capability of the LLM can be used prior to step S3 to prompt parties to provide supplementary information, as follows:
S6: Information of a single party, together with a request for whether supplementary information is needed, is input into the LLM. Based on the returned information, it is determined whether to prompt the corresponding party to supplement information. This step may be performed in multiple rounds until the party's information is complete;
S7: The information of all parties, together with a request for whether a specified party needs to supplement information, is input into the LLM. Based on the returned information, it is determined whether to prompt the specified party to supplement information. This step may be performed in multiple rounds until the parties' information is complete.

When multiple parties submit their respective information, inconsistencies may arise among the information. Therefore, the following steps are included before step S5:
S8: A request to find inconsistent information among the parties' submissions, together with all information from the relevant parties, is submitted to the LLM. Based on the returned result, it is determined whether inconsistent information exists. The inconsistent part may be a contradiction in information, or a part mentioned by one party but not by another;
S9: If the LLM discovers a contradiction in information, it prompts the relevant party to modify the information or submit further proof;
S10: If the LLM discovers important information that some parties have mentioned but others have not, it prompts the parties who have not mentioned it;
S11: After the aforementioned inconsistent information is modified, the relevant parties confirm the information for consistency;
S12: If the relevant parties cannot provide further information and consistency cannot be confirmed, the task is terminated.

When the decision or recommendation given by the LLM is very important, to avoid errors, the following steps can be added before the final decision or recommendation is given:
S13: A forthcoming version of the decision or recommendation is sent to the relevant parties for pre-confirmation;
S14: If the relevant parties have no objections, the version from S13 is confirmed as the final version and is re-sent to the relevant parties under the name of the final version;
S15: If a relevant party raises an objection and can provide supplementary information, then step S3 is performed again.

Steps S13 and S15 may be performed in multiple rounds. If agreement cannot be reached, the following step is performed:
S16: The final information submitted by each party, the modification process, together with the given version of the decision or recommendation, is sent to the relevant parties or a designated third party that is not among the parties, and the task is terminated.

To address insufficient information, the following step is added:
S17: The number of parties may be increased or decreased as needed. When a party is added, the newly added party provides information according to step S2; other parties need not re-provide information.

An apparatus for implementing multimodal artificial intelligence involved in the present invention includes the following modules:
D1: An information input module, configured to receive party information, with information formats including but not limited to images, video, audio, and text;
D2: An information storage module, configured to store the party information from D1 in corresponding spaces for the parties, and to store LLM task information, output format information, and LLM output data;
D3: An LLM input module, namely an input interface of the LLM, configured to take the information from D2, label the corresponding party, serialize the information, and input it into the LLM; if the information includes data that cannot be simply serialized, such as but not limited to images, audio, or video, the corresponding data is labeled with the party and sent separately to the LLM;
D4: An LLM output module, configured to store the decision or recommendation given by the LLM in D2;
D5: An information output module, configured to organize and display the decision or recommendation information in D2 to a designated party.

Optional module functions further include:
D4: The LLM output module further outputs prompt information for supplementary information required by parties, prompt information for confirming information consistency, and prompt information for confirming the decision or recommendation, and stores the prompts in D2;
D5: The information output module provides prompts to the corresponding party based on the foregoing prompt information.

### BENEFICIAL EFFECTS

(1) Speed: a decision or recommendation can be provided in a very short time, which would normally take several weeks or even months, greatly reducing communication time;
(2) Low cost: professionals who can provide mediated decisions or recommendations are usually very expensive, whereas the cost of artificial intelligence is greatly reduced;
(3) Neutrality: it is difficult for an LLM to be artificially controlled for a specific matter, so the decision will be very fair;
(4) Professionalism: an LLM encompasses a vast amount of knowledge, so the decision or recommendation will be more comprehensive and reasonable.

### BRIEF DESCRIPTION OF THE DRAWINGS

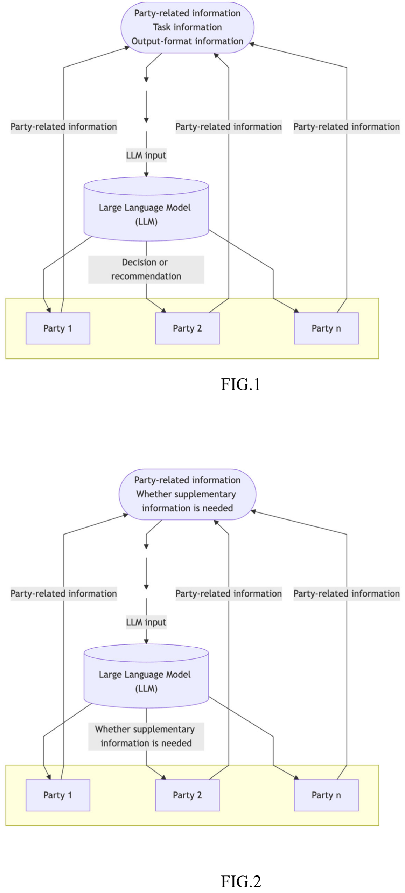

FIG. 1 is a basic logic diagram of the method;
FIG. 2 is a logic diagram for supplementing information;

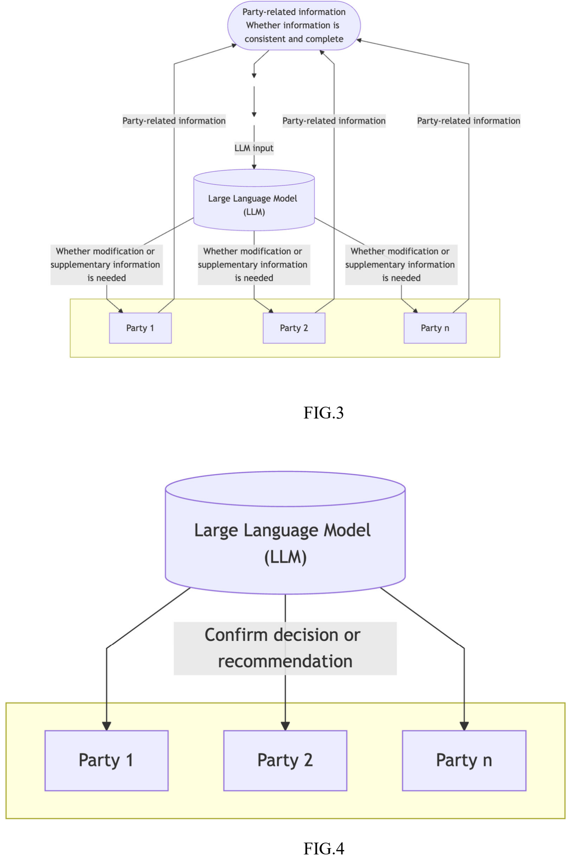

FIG. 3 is a logic diagram for checking information consistency and completeness;
FIG. 4 is a logic diagram for information confirmation;

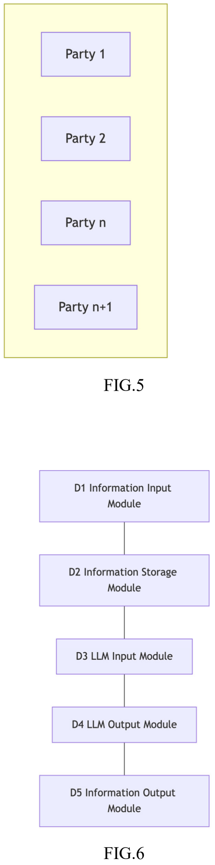

FIG. 5 is a logic diagram for adding parties;
FIG. 6 is a block diagram of the apparatus.

### BEST MODE FOR CARRYING OUT THE INVENTION

Example 1: LLM-based judge. In a typical case, there are roles such as plaintiff and defendant, corresponding to two parties. The plaintiff may input claims and evidence into the system of the present invention to be stored in a storage space corresponding to the plaintiff. The defendant may input defenses and evidence into a storage space corresponding to the defendant. The foregoing information, together with task information and output-format requirements, is input into the LLM. For example, the plaintiff requests the defendant to repay an overdue loan of 10,000 yuan and provides a loan note as evidence. The following prompt may be input to the model: "You will act as a judge and provide a judgment for the following case, which is a debt dispute," and then the plaintiff's request, the loan note as evidence, and the defendant's information are respectively input. After analysis, the LLM-based judge outputs a judgment requiring the defendant to repay the principal and interest. The corresponding result is sent to the plaintiff and the defendant.

### DETAILED DESCRIPTION / EMBODIMENTS

Two examples are listed to illustrate the broad application prospects of the present invention.

Example 1: LLM-based judge. In a typical case, there are roles such as plaintiff, defendant, and witness, corresponding to three parties. The plaintiff may input claims and evidence into a storage space corresponding to the plaintiff. The defendant may input defenses and evidence into a storage space corresponding to the defendant. The witness may input testimony into a storage space corresponding to the witness. The foregoing information, together with task information and output-format requirements, is input into the LLM.

For example, the plaintiff requests the defendant to repay an overdue loan of 10,000 yuan and has a loan note as evidence. The following prompt may be input to the model: "You will act as a judge and provide a judgment for the following case, which is a debt dispute." Then the plaintiff's request and the loan note as evidence and the defendant's information acknowledging the authenticity of the loan note are input. After analysis, the LLM-based judge finds that the due date of the loan was 2.5 years ago, which exceeds the statute of limitations. The LLM-based judge prompts the plaintiff (step S6) for evidence that a demand was made within the last two years so that the statute-of-limitations period can be recalculated. The plaintiff then provides a group chat screenshot from one year ago showing a demand. The plaintiff also finds a friend from the group chat to act as a witness to prove the authenticity of the chat. The witness inputs the corresponding chat screenshot. The LLM-based judge prompts the defendant (step S10) to confirm the authenticity of the chat record. The defendant confirms that the chat record is authentic (step S11). The LLM-based judge finally outputs a judgment requiring the defendant to repay principal and interest. The judgment is forwarded to both parties (step S13). The defendant chooses to accept the result and not to further appeal (step S14).

Example 2: LLM-based confidante. When a couple argues, both parties send their viewpoints and feelings via the information input module (D1). After sequencing and analysis by the LLM (steps S3-S5), the LLM provides respective recommendations to de-escalate conflict, and the parties may perform pre-confirmation and confirmation per steps S13-S14.

### INDUSTRIAL APPLICABILITY

The present invention provides a method and an apparatus by which multiple parties utilize an LLM for middle-actor decision or recommendation. The invention has applicability across industries and scenarios, including but not limited to legal decisions, business negotiations, social services, and personal decision assistance. By leveraging the powerful processing capabilities and knowledge base of an LLM, the present invention can provide multi-party decisions and recommendations that are rapid, accurate, and cost-effective.

First, the invention is cost-effective compared to traditional human middle-actor services. Use of AI reduces reliance on professionals and avoids costly consulting fees. Second, the invention has high speed: the LLM can quickly process and analyze large amounts of data, providing instant decisions and recommendations. Third, neutrality and objectivity are ensured because the LLM is not influenced by personal emotions, bias, or conflicts of interest. Finally, the LLM has a vast and continuously updated knowledge base to provide professional recommendations across a wide range of domains.

## Claims

1. A method for implementing multi-party decision or recommendation using a large language model, wherein output information from each party comprises output information related to the party's own content concerning a matter of common interest, the content including but not limited to images, video, audio, and text; input information for the LLM comprises jointly inputting the foregoing parties' information to the LLM; in addition, a task to be executed by the LLM upon receiving the foregoing input information and a format of output information are specified; and output information of the LLM comprises outputting, after completing the required task, a task result in the specified format, the result being a decision or recommendation corresponding to at least two relevant parties, wherein respective parties' results may be completely identical; the specific implementation steps comprise:
S1 specifying task information;
S2 each party inputting, into a space corresponding to the party, information related to the party concerning the task specified in S1;
S3 serializing, in sequence, information of each party and inputting the serialized information, together with the task information and the output format, into the LLM, the default output format being one corresponding decision or recommendation for each party;
S4 if a party's information includes data that cannot be simply serialized, including but not limited to images, audio, and video, labeling the data with the party and sending the data separately to the LLM;
S5 the LLM returning a decision or recommendation corresponding to specified parties in the designated format, wherein respective parties' results may be completely identical.

2. The method according to claim 1, wherein information of a single party together with a request for whether supplementary information is needed is input into the LLM, and, based on information returned by the LLM, it is determined whether to prompt the corresponding party to provide supplementary information.

3. The method according to claim 1, wherein information of all parties together with a request for whether a specified party needs to provide supplementary information is input into the LLM, and, based on information returned by the LLM, it is determined whether to prompt the specified party to provide supplementary information.

4. The method according to claim 1, wherein an information inconsistency problem can be solved, the specific implementation steps comprising:
S8 submitting, together with all information of relevant parties, a request to the LLM to find inconsistent information submitted by the parties, and determining, based on the returned result, whether inconsistent information exists, inconsistent parts including information contradictions or parts not mentioned by relevant parties;
S9 if the LLM discovers a contradiction, prompting relevant parties to modify information or submit further proof;
S10 if the LLM discovers important information mentioned by some parties but not by others, prompting parties who have not mentioned the relevant information;
S11 after the foregoing inconsistent information is modified, relevant parties confirming information consistency.

5. The method according to claim 1, wherein a pre-confirmation of a final decision or recommendation is performed, the specific steps comprising:
S13 sending a forthcoming version of the decision or recommendation to relevant parties for pre-confirmation;
S14 if relevant parties have no objections, confirming the version of S13 as a final version and resending it to relevant parties under the name of the final version;
S15 if a relevant party raises an objection and can provide supplementary information, then performing step S3.

6. The method according to claim 1, wherein a number of parties can be increased or decreased as needed, and, when a party is added, only the newly added party needs to provide corresponding information according to step S2, and other parties need not re-provide information.

7. An apparatus for implementing multi-party decision or recommendation using an LLM, comprising: D1, an information input module configured to receive information inputs by parties, information formats including but not limited to images, video, audio, and text; D2, an information storage module configured to store information of parties from D1 in spaces corresponding to the parties, and to store LLM task information, output format information, and LLM output data; D3, an LLM input module, namely an input interface for the LLM, configured to take information from D2, label corresponding parties, serialize the information, and input the information into the LLM, and, if the information includes data that cannot be simply serialized, including but not limited to images, audio, and video, to label the data with the party and send the data separately to the LLM; D4, an LLM output module configured to store the decision or recommendation given by the LLM into D2;
and D5, an information output module configured to organize and display decision or recommendation information in D2 to a designated party.

8. The apparatus according to claim 7, wherein the modules further comprise: D4, the LLM output module is further configured to output prompt information for supplementary information required by parties, prompt information for confirming information consistency, and prompt information for confirming the decision or recommendation, and to store the prompt information in D2; and D5, the information output module is configured to provide prompts to corresponding parties based on the foregoing prompt information.
